# EUROPÄISCHE PATENTSCHRIFT

(11) **EP 0 628 468 B1**
(45) Veröffentlichungstag und Bekanntmachung des Hinweises auf die Patenterteilung: **23.09.1998**
(21) Anmeldenummer: 94810328.8
(22) Anmeldetag: 02.06.1994
(51) Int. Cl.: B62D 33/04, B62D 31/02, B61D 33/00, B60N 2/24

(54) **Sitzbefestigung**
Seat support
Support de siège

(30) Priorität: 08.06.1993 CH 1714/93
(43) Veröffentlichungstag der Anmeldung: 14.12.1994
(73) Patentinhaber: Alusuisse Technology & Management AG, 8212 Neuhausen am Rheinfall (CH)
(72) Erfinder: Waldeck, Klaus-Dieter, CH-8954 Geroldswil (CH); Melina, Vito, CH-5000 Aarau (CH)

(56) Entgegenhaltungen:
- DE-C- 760 972
- GB-A- 1 198 987
- US-A- 5 056 848
- US-E- R E29 271

## Beschreibung

Vorliegende Erfindung betrifft eine Sitzbefestigung an den vertikalen Seiten einer Gerippestruktur, wobei die Gerippestruktur eine Sitzschiene, eine Schrägverbindungsaufnahme , Seitenwandsäulen und/oder Konsolen als vertikale Elemente und einen Boden enthält und wobei die Sitzbefestigung einen waagrechten oberen Querträger und eine nach unten führende Schrägverbindung enthält und wobei der Querträger an vertikalen Elementen festgelegt ist und die Schrägverbindung an vertikalen Elementen oder im Eckbereich zwischen vertikalen Elementen und Boden festgelegt ist, sich die Schrägverbindung an ihrem unteren Ende über eine Schrägverbindungsaufnahme abstützt, die ein torsionssteifes Element enthält oder mit einem torsionssteifen Element starr verbunden ist, das torsionssteife Element sich über wenigstens die Länge einer Sitzanordnung innerhalb der Gerippestruktur erstreckt. Diese im Oberbegriff des Anspruchs 1 enthaltene Merkmalskombination ist aus der Patentschrift US-A-5 056 848 bekannt. Vorliegende Erfindung betrifft auch die Verwendung der Sitzbefestigung wie in den unabhängigen Ansprüchen 8-10 angegeben.

Es ist bekannt, beispielsweise Sitze oder Sitzgelegenheiten, ohne vertikale Abstützung auf den Boden, nur an Seitenwänden zu befestigen. In der Praxis verwendet man für eine solche Befestigung beispielsweise wenigstens einen an einer vertikalen Wand befestigten horizontalen Querträger und einen am Querträger festgelegten Träger, der nach schräg unten führt und eine Schrägverbindung zur Wand darstellt und der ebenfalls an der Wand festgelegt ist.

An diese Trägerkonstruktion können beispielsweise Sitzschalen befestigt werden. Durch das Eigengewicht der Sitzbefestigung und insbesondere bei Belastung der Sitze wirken über den Querträger Zugkräfte und über die Schrägverbindung Druckkräfte auf die Wand.

Aus der US 5'056'848 ist darüber hinaus bekannt geworden, Passagiersitze in Bussen nicht an den Seitenwänden zu befestigen, sondern die Kräfte in die Unterstruktur einzuleiten. Dazu sind zwei Anlenkpunkte zwischen der Unterstruktur des Busses und dem an der Unterstruktur angelenkten Stützrahmen vorgesehen.

Beispielsweise bei Gerippestrukturen, wie sie für Wartehäuschen, Reisebusse, Omnibusse, Eisenbahn- und Strassenbahnwagen Verwendung finden, können die Kräfte, die durch die Sitze in die Wand eingeleitet werden, zu temporären oder plastischen Verformungen und schliesslich zu Rissen durch Ermüdung in tragenden Teilen und Verkleidungsteilen führen. Zur Vermeidung solcher Schäden können beispielsweise einzelne oder alle belasteten Teile sehr stark dimensioniert werden. Dies führt jedoch in aller Regel zu nicht angestrebten Gewichtszunahmen der Konstruktion, oder es können Bodenrahmenen vorgesehen werden, bei denen die Kräfte an zwei in einem Abstand übereinander liegenden Punkte in den Bodenrahmen eingeleitet werden. Dies bedeutet eine hohe Wagenkastenkonstruktion mit einem doppelten Boden oder einem Hohlraum.

Aufgabe vorliegender Erfindung ist es, eine leichte Konstruktion zur Verfügung zu stellen, die es ermöglicht bei geringer Bauhöhe des Bodens, hohe, auf die Gerippestruktur einwirkende Kräfte aufzunehmen und in der Konstruktion der Gerippestruktur gleichmässig zu verteilen, resp. in besonders beanspruchbare Zonen einzuleiten und die Verformungen zu minimalisieren.

Erfindungsgemäss wird dies dadurch erreicht, dass das torsionssteife Element (1) ein Hohlkammerprofil oder ein Randprofil einer Bodenplatte ist und die Schrägverbindungsaufnahme (10) oberhalb des Hohlkammerprofils oder des Randprofils mit diesem starr verbunden ist.

Mit Sitzanordnung wird im wesentlichen das Konstruktionselement aus Querträger, Schrägverbindung, Sitzschalen und Zubehörteilen verstanden.

Der obere Querträger ist in der Regel ein horizontal angeordneter Querträger und kann ein Profil oder eine Profilkonstruktion, beispielsweise aus Metall darstellen oder kann eine Kunststoff- oder Kunststoff-Metall-Konstruktion darstellen. Solche Kunststoff- oder Kunststoff-Metall-Konstruktionen können bereits die Sitzkontur enthalten.

In der Praxis kann der obere Querträger als ein einzelnes Profil oder ein Profilpaar, beispielsweise in Form von Kastenprofilen, von T-Profilen, von I-Profilen oder von X-Profilen angewendet werden. Am wandseitigen Ende kann das Profil einen Befestigungsteil aufweisen, der mit der Befestigungsvorrichtung an der Wand korrespondiert. Dies kann z.B. ein Flansch mit Bohrungen sein oder das Querprofil kann abgekantet sein und der abgekantete Teil kann an der Befestigungsvorrichtung der Wand festgelegt werden.

Mit einem Profilpaar sind beispielsweise zwei parallele Profile, die endseitig über eine Traverse verbunden sind oder zwei V-förmig zusammenlaufende Profile umfasst.

Bevorzugt werden Profile mit wandseitigen Befestigungsteilen in Form von Flanschen. Die Flansche können auf der gegen die Wand gerichteten Seite mit einem horizontal verlaufenden Wulstpaar versehen sein. Das Wulstpaar kann in Keilflächen eines C-Profils eingreifen, welches die Befestigungsvorrichtung an der Wand und somit die Sitzschiene darstellt. Mittels Schrauben welche in die Nut des C-Profils greifen und Klemmplättchen, als Gegenstück zu den Schrauben, welche innerhalb des C-Profils angeornet sind, können die Flansche an der Sitzschiene festgelegt werden. Das C-Profil kann seinerseits eine Sitzschiene darstellen, die beispielsweise horizontal über die Länge oder eine Teillänge der Gerippestruktur läuft.

Die Schrägverbindung kann ein Profil oder eine Profilkonstruktion, beispielsweise aus Metall, darstellen oder kann Teil einer integrierten Sitzkonstruktion aus Sitzschale, Querträger und Schrägverbindung aus einem Kunststoffverbund oder einem Kunststoff-Metall-Verbund sein.

Die Profile können Eisen- oder Nichteisenmetallprofile sein, wie Stahlrohre, Blechkonstruktionen oder stranggepresste Aluminiumprofile. Die Kunststoff- oder die Kunststoff-Metall-Verbund-Konstruktionen können beispielsweise faserverstärkte Kunststoffe, wie mit Metallprofilen, Glasfasern, Kohlefasern, Aramidfasern, Polyamidfasern usw. oder mit Geweben, Gewirken oder Vliessen genannter Materialien verstärkte Kunststoffe enthalten. Die Kunststoffe sind z.B. ungesättigte Polyesterharze oder Epoxidharze oder auch Polyolefin- oder Polyamidharze.

Metallteile, wie z.B. Befestigungsflansche aus Metall, können in eine Kunststoffkonstruktion integriert werden.

Die Schrägverbindung kann an ihrem wandseitigen Ende einen Befestigungsteil aufweisen. Dieser Befestigungsteil kann z.B. die gleichen Konstruktionsmerkmale aufweisen, wie derjenige des Querträgers. Der Befestigungsteil kann auch ein Fussteil in Form beispielsweise einer Fussplatte sein.

Der obere Querträger und das obere Ende der Schrägverbindung können auf der wandfernen Seite trennfest miteinander verbunden sein oder der Querträger und die Schrägverbindung sind formstabil verbundene Teile einer integrierten Konstruktion.

Die Schrägverbindung stützt sich z.B. über den Fussteil auf eine Schrägverbindungsaufnahme ab.

Die Schrägverbindungsaufnahme kann als Teil einer Konsole oder einer Seitenwandsäule eine Fussteilaufnahme, z.B. in Form eines Köchers oder einer Vertiefung sein oder kann eine Schraub- oder Schweissverbindung etc. sein. Zweckmässig ist die Schrägverbindungsaufnahme Bestandteil der Seitenwandsäulen oder Konsolen und die Seitenwandsäulen oder Konsolen sind mit dem torsionssteifen Element starr verbunden.

Zweckmässig hat die Schrägverbindungsaufnahme die Form eines über die Länge oder eine Teillänge der Gerippestruktur verlaufenden Profils, wie eines Metallprofiles und insbesondere eines Strangpressprofiles, z.B. aus Aluminium. Das Profil kann als Schrägverbindungsaufnahme eine Anformung aufweisen, welche den Fussteil der Schrägverbindung aufnimmt, resp. abstützt. Das Profil kann eine weitere Anformung aufweisen, welche sich gegen die Konsolen und/oder Seitenwandsäulen abstützen kann.

Die Schrägverbindungsaufnahme kann einen Bodengurt darstellen, der seinerseits an den Seitenwandpfosten und/oder an den Konsolen festgelegt ist.

Stellt die Schrägverbindungsaufnahme..ein Profil dar, kann das Profil z.B. im wesentlichen einen viertelkreisförmigen Querschnitt aufweisen, wobei das untere Ende sich gegen den Boden und das torsionssteife Element oder gegen das torsionssteife Element abstützt, und am oberen Ende kann das Profil eine Anformung als Schrägverbindungsaufnahme und eine weitere Anformung als Verbindung zu den Seitenwandsäulen resp. Konsolen aufweisen.

Somit stellt die untere Schrägverbindungsaufnhame bevorzugt einen Bodengurt dar, der seinerseits starr am torsionssteifen Element festgelegt ist, beispielsweise durch Schrauben, Nieten, Schweissen, Kleben, Klemmen oder Kombinationen davon. Die Schrägverbindungsaufnahme kann sich über die ganze Länge oder Teile der Länge des torsionssteifen Elementes erstrecken.

Das torsionssteife Element erstreckt sich wenigstens über die Länge einer Sitzanordnung innerhalb der Gerippestruktur, d.h. das torsionssteife Element erstreckt sich beispielsweise seitlich entlang einer Sitzreihe oder zwei oder mehrerer Sitzreihen oder über die ganze Länge der Gerippestruktur.

Der Querschnitt des torsionssteifen Elementes kann beispielsweise polygonal und dabei insbesondere quadratisch oder rechteckig, rund oder oval sein. Das Hohlkammerprofil kann auch ein Mehrkammerhohlprofil sein. Das torsionssteife Elemente stützt sich in einer Höhe am Boden oder an Bodenteilen der Gerippestruktur ab. Damit lassen sich beispielsweise Wagenkörper für Reisebusse oder Omnibusse in Niederflurbauweise verwirklichen, da die Sitzbefestigung in der Vertikalen keine zwei im Abstand übereinanderliegenden Befestigungspunkte vonnöten sind.

Das torsionssteife Element kann über seine ganze Länge oder in Abständen mit dem Boden verbunden sein. Der Boden kann als Bauteil aus Längsträgern und Auslegern oder Traversen (Leiterrahmen) vorliegen. Das torsionssteife Element kann mit den Auslegern oder Traversen starr verbunden sein. Der Boden kann ein Fahrgestellängsträger mit Fahrgestelltraversen sein und das torsionssteife Element kann mit den Fahrgestelltraversen starr verbunden sein. Über dem Boden kann ein begehbarer Boden gelegt werden.

Das torsionssteife Element kann auch Teil einer Bodenplatte sein. Zweckmässig ist das torsionssteife Element dann ein Randprofil einer Bodenplatte, insbesondere einer Verbundplatte. Eine Verbundplatte kann zwischen den Randprofilen beispielsweise untere und obere Deckschichten aus Metall und/oder Kunststoff und einen Kern aus zellenförmigem Kunststoff, wie Kunststoffschäumen oder aus Metall, wie Metallwaben, aufweisen. Die Bodenplatte ist in der Regel ein einstückiges Element, das sich über eine ganze Gerippekonstruktion erstrecken kann.

Somit kann das torsionssteife Element auch Teil des Bodens oder Teil einer Verbundplatte sein. Dies führt zu der angestrebten verringerten Bauhöhe gegenüber bekannten Gerippekonstruktionen.

Über die Länge der Gerippestruktur verteilt, können Seitenwandsäulen und/oder Konsolen vorgesehen sein.

Die Konsolen und Seitenwandsäulen sind im Bereiche ihres unteren Endes am torsionssteifen Element, z.B. an dessen äusseren Seitenfläche starr festgelegt. Die Konsolen und Seitenwandsäulen können z.B. durch Schraub-, Niet-, Schweiss- und/oder Klebverbindungen festgelegt werden.

Die Konsolen können beispielsweise faserverstärkte Kunststoffteile, geschweisste oder geschraubte Metallteilkonstruktionen, Gussteile oder Schmiedeteile aus Metall, wie Aluminium, Eisen oder Stahl sein, und die Seitenwandsäulen können beispielsweise Strangpressprofile aus Metall, wie Aluminium oder Aluminiumlegierungen sein.

Die Seitenwandsäulen können ein Hohlkammerprofil, ein U-Profil, ein Winkelprofil oder eine Kombination von solchen Profilen darstellen. Seitenwand-Säulenprofile sind zweckmässig rechteckige Hohlkammerprofile, welche beidseits an den Stirnseiten angeformte C-Profile enthalten. Im Bereich des unteren Endes der Seitenwandsäulen können beispielsweise zur Verstärkung an den Stirnseiten Winkelprofile vorgesehen sein, die einerseits an den Stirnseiten, andererseits am torsionssteifen Element festgelegt sind.

Die Seitenwandsäulen können beispielsweise in den Eckbereichen und gegebenenfalls in regelmässigen oder unregelmässigen Abständen dazwischen über die Länge der Gerippestruktur verteilt angeordnet werden. Auf der Einbauhöhe der oberen Querverbindung, d.h. über der Einbauhöhe der unteren Sitzbefestigung, kann z.B. zwischen den Seitenwandsäulen oder zwischen den Konsolen oder unmittelbar auf der Konsole aufliegend, ein Längsgurt angeordnet werden. Der Längsgurt kann ein Profil, wie ein stranggepresstes Metallprofil, und insbesondere ein Strangpressprofil aus Aluminium oder dessen Legierungen, sein. Der Längsgurt kann ein Hohlkammerprofil sein, das an seiner Unterseite und an seiner Oberseite je eine angeformte C-förmige Nut aufweist.

Der Längsgurt kann mittels Eckstücken und Schrauben und Klemmplättchen, welch letztere in der C-förmigen oder hinterschnittenen Nut, sowohl von Seitenwandsäule als auch des Längsgurtes eingelegt sind, festgelegt werden.

Im wesentlichen parallel zum Längsgurt auf gleicher Höhe und in der Regel am Längsgurt festgelegt, läuft die Sitzschiene. Die Sitzschiene stellt ein Profil dar, beispielsweise ein C-Profil, das sich über die ganze Länge oder Teile der Länge des Kastenaufbaues erstreckt und an dem die oberen Querträger festgelegt sind. Die Sitzschiene ist beispielsweise ein Strangpressprofil aus Metall, wie Aluminium oder dessen Legierungen.

Ist über die ganze Länge kein Unterbruch durch Öffnungen wie Türen oder dergleichen vorzusehen, kann sich die Sitzschiene über die ganze Länge der Gerippestruktur erstrecken, sind Öffnungen, die bis zum Boden reichen vorgesehen, so kann sich die Sitzschiene über Teillängen zwischen den Enden der Gerippestruktur und den Öffnungen und/oder zwischen den Öffnungen erstrecken. Insbesondere erstreckt sich die Sitzschiene wenigstens über die Länge einer Sitzanordnung.

Die Konsole kann eine Höhe aufweisen, die bis in den Bereich der Befestigung des oberen Querträgers reicht.

Die Konsolen weisen an ihrem oberen Ende beispielsweise eine Befestigungsvorrichtung auf, welche in trennfeste Verbindung mit den Längsgurten gebracht werden kann. Diese Befestigungsvorrichtung kann beispielsweise ein Flansch sein, der auf der Oberseite, dem Längsgurt zugewandt, einen Doppelwulst aufweist. Der Doppelwulst greift in ein unten am Längsgurt angeformtes C-Profil oder in eine Nut.

Die Konsolen können auch stirnseits hinterschnittene Nuten oder C-Profile aufweisen und über Eckstücke, wie bei den Seitenwandsäulen, mit dem Längsgurt verbunden werden.

Mittels Klemmstücken, in der hinterschnittenen Nut angeordnet, und Schrauben können dann die Flansche der Konsole, resp. die stirnseitigen Nuten der Konsole, resp. die stirnseitigen Nuten der Konsole, und die Längsgurten gegenseitig festgelegt werden.

Die Sitzschiene kann zweckmässig am Längsgurt und/oder an den Konsolen festgelegt werden. Bevorzugt wird die Sitzschiene am Längsgurt festgelegt. Das Profil der Sitzschiene kann ein C-Profil darstellen, das z.B. durch Schraub-, Niet-, Schweiss und/oder Klebeverbindungen z.B. am Längsgurt festgelegt ist.

Schraubverbindungen mit Klemmplättchen sind beispielsweise auch in der schweizerischen Patentschrift 627 982 beschrieben. Diese Ausführungsart kann in vorliegender Erfindung zur trennfesten Verbindung an den vorzusehenden Stellen und wie im Text erwähnt, angewendet werden.

Gegebenenfalls kann der Längsgurt und die Sitzschiene ein einziges Profil mit den entsprechenden Anformungen von Befestigungsvorrichtungen, wie C-Profilen oder Wulsten, darstellen.

Vorliegende Erfindung betrifft auch die Verwendung der Sitzbefestigung nach vorliegender Erfindung in Gerippestrukturen.

Gerippestrukturen können beispielsweise Teile von Gebäuden darstellen, wie Wartehallen, Wartehäuschen z.B. in einer Metall- oder Metall-Glas-oder Metall-Verbundplatten-Konstruktion.

Bevorzugt ist die Verwendung der erfindungsgemässen Sitzbefestigung an Gerippestrukturen für Wasser- und insbesondere Landfahrzeuge, wie Eisenbahnwagen, Reisebussen, Omnibussen, ferner Seilbahnkabinen usw.

Besonders bevorzugt ist die Verwendung der Sitzbefestigung an Gerippestrukturen von Niederflurbussen.

Anstelle von Sitzen können die Sitzbefestigungen als Sitzbehelfe oder auch zur Aufnahme von Tablaren oder anderen Lagervorrichtungen für Lasten, vorgesehen werden.

Stellt die Schrägverbindungsaufnahme und die Sitzschiene ein durchlaufendes Profil dar, können die Sitzanordnungen nach Lösen der Befestigungsteile in Längsrichtung frei verschoben und an beliebiger Stelle fixiert werden. Da die Sitzbefestigungen nicht mit den Wandverkleidungen verbunden sind, werden keine Kräfte und Kraftwechsel in die beschädigungsanfälligen Wandteile eingeleitet.

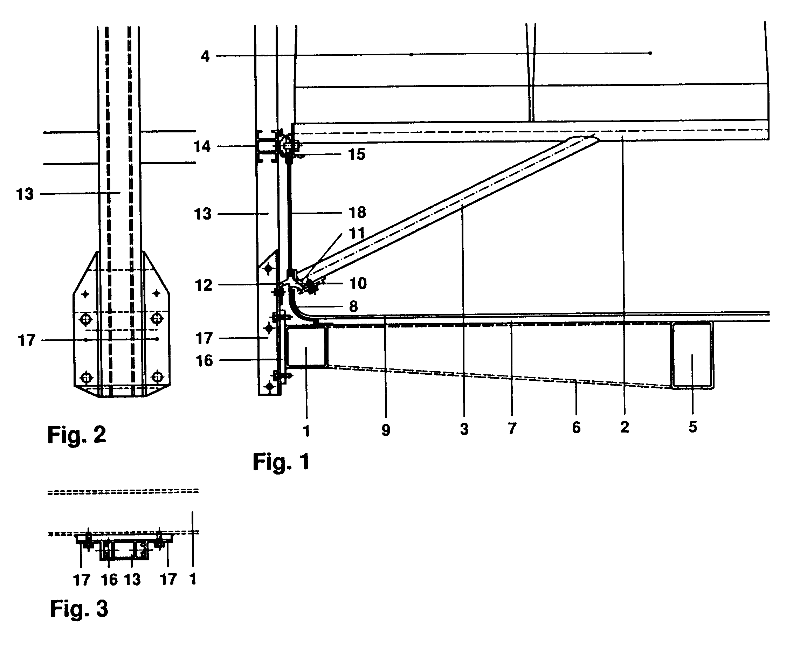

Die nachfolgenden Figuren 1 bis 8 erläutern die Sitzbefestigung beispielhaft näher.

Figur 1 zeigt den Querschnitt durch einen Teil eines Rumpfes, beispielsweise einer Gerippestruktur. Ein torsionssteifes Element 1 ist über Traversen 6 an einem Fahrgestellrahmen oder Fahrgestell-Längsträger 5 abgestützt. Das torsionssteife Element 1, die Traversen 6 und der Fahrgestelllängsträger 5 können beispielsweise verschraubt, verschweisst oder verklebt sein oder durch eine Kombination solcher Mittel miteinander verbunden sein. Es ist auch möglich, das torsionssteife Element 1 beispielsweise direkt in eine Bodenplatte zu integrieren. Eine solche Konstruktion bedarf dann in der Regel eines anderen Bodens, z.B. einer Verbundplatte. Über den Traversen 6 und dem Fahrgestelllängsträger 5 ist der begehbare Boden 7 angebracht. Ein solcher Boden kann beispielsweise aus Holz, Kunststoff, Kunststoffverbunden, Metall, Metallverbunden oder Kunststoff-Metall-Verbunden bestehen. Vorliegender Ausschnitt aus einer Gerippestruktur bezieht sich beispielsweise auf die linke Gerippestrukturhälfte, während die rechte Gerippestrukturhälfte beispielsweise seitenverkehrt die selben Konstruktionselemente aufweisen kann. Über dem torsionssteifen Element ist der Bodengurt 8 angebracht. In vorliegender Ausführungsweise ist der Bodengurt ein Strangpressprofil, das einen Viertelkreis beschreibt, an dessen unterem Ende eine Fahne angeformt ist. Die Fahne untergreift den Boden 7 und ein Bodenbelag 9 deckt sowohl Boden als auch den Bodengurt 8 im Bereich des Viertelkreises ab. Damit können keine Schmutzpartikel, Nässe, Feuchtigkeit und dergleichen in die Nahtbereiche zwischen Boden und Bodengurt gelangen. Am oberen Ende weist der Bodengurt 8 eine Anformung auf, welche die untere Schrägverbindungsaufnahme 10 darstellt. Ein Fussteil 11, welcher an der Schrägverbindung 3 angebracht ist, passt in die Schrägverbindungsaufnahme 10. Der Bodengurt 8 weist eine Anformung 12 auf, welche eine stützende Verbindung zur Seitenwandsäule 13 schafft. Über die Anformung 12 und die Seitenwandsäulen 13 und über die Auflage des Bodengurtes 8 auf dem torsionssteifen Element 1 kann sich die Schrägverbindungsaufnahme 10 gegen eine Auslenkung abstützen und die einwirkenden Kräfte in das torsionssteife Element 1 einleiten. In regelmässigen oder unregelmässigen Abständen können zur Bildung der Gerippestruktur Seitenwandsäulen 13 angebracht sein. Diese Seitenwandsäulen 13 können beispielsweise an Befestigungsplatten 16 festgelegt, wie z.B. angeschraubt, angenietet, angeschweisst oder angeklebt sein. Die Befestigungsplatten sind ihrerseits trennfest mit dem torsionssteifen Element 1 verbunden. Zwischen den Seitenwandsäulen 13 können Längsgurten 14, beispielsweise stranggepresste Profile, vorgesehen sein. Trennfest mit diesen Längsgurten 14 sind Sitzschienen 15 verbunden. Die Sitzschienen 15 können ebenfalls beispielsweise stranggepresste Aluminiumprofile sein. Die Sitzschiene 15 stellt z.B. ein C-Profil dar. Das C-Profil bildet eine hinterschnittene Nut, in welche Klemmplättchen eingeführt werden können. Ein Querträger 2 weist an seinem wandseitigen Ende einen Flansch mit einem Bohrloch auf, durch das eine Schraubverbindung geführt werden kann. Durch Verbinden der Schraube mit den Klemmplättchen wird der Querträger 2 trennfest mit der Sitzschiene 15 verbunden. Der Querträger 2 ist trennfest mit einer Schrägverbindung 3 verbunden und bildet somit ein Sitzgestell oder auch ein Traggestell. In vorliegender Figur sind beispielhaft zwei Sitze 4 skizziert. Es können auch statt der zwei skizzierten Sitze 4 nur ein Sitz etc. vorgesehen sein oder anstelle von Sitzen können auch belastbare Flächen oder Gestelle vorgesehen werden. Es ist auch wie vorbeschrieben möglich, die Verbindungen 2 und 3 beispielsweise in Form eines Kunststoff oder Kunststoff-Metall-Verbundes als ganze Einheit zu gestalten. Entsprechend sind dann Anschlüsse wie Flansche und Fussplatten vorzusehen. Die Schrägverbindung 3 weist an ihrem unteren Ende eine Fussplatte 11 auf, die hier einen keilförmigen Querschnitt hat und durch eine Schraub-Klemmplatten-Verbindung an der Schrägverbindungsaufnahme 10 festgelegt ist. Die Fussplatte 11 kann auch andere Formen aufweisen. Gegen ein Abrutschen kann die Schrägverbindungsaufnahme 10 auch ein engeres V-Profil bilden oder es können in regelmässigen Abständen Ausnehmungen an der Schrägverbindungsaufnahme 10 angebracht werden, in welche Ausformungen oder Nasen, welche am Fussteil 11 angebracht sind, formschlüssig eingreifen. Zwischen dem Bodengurt 8 und der Sitzschiene 15 ist eine Verkleidung 18, beispielsweise aus Metall oder Kunststoff oder anderen flächigen Materialien, wie beispielsweise einer Verbundplatte, angebracht. Zur sicheren Halterung dieser Verkleidung 18 weisen sowohl Bodengurt 8 als auch Sitzschiene 15 entsprechende U-förmige Anformungen auf.

Die Figur 2 zeigt die Seitenansicht einer Seitenwandsäule. Die Seitenwandsäule 13 weist an ihrem untern Ende je ein Winkelprofil 17 auf. Die Winkelprofile 17 sind mit der Befestigungsplatte 16, beispielsweise durch Schraubverbindungen, festgelegt und in den seitlichen Flanken der Winkelprofile 17 sind Schraubverbindungen vorgesehen, welche in die stirnwandseitigen C-Profile der Seitenwandsäule 13 greifen und mittels Klemmplättchen oder Nutensteinen die Seitenwandsäulen 13 an den Winkelprofilen 17 festlegen.

Figur 3 zeigt die Draufsicht auf eine Seitenwandsäule 13 und in gestrichelter Linie das torsionssteife Element 1. Am torsionssteifen Element 1 ist eine Befestigungsplatte 16 beispielsweise angeschweisst, angeklebt, angenietet oder angeschraubt, in vorliegendem Falle angeschweisst. Die Winkelstücke 17 sind ihrerseits an der Befestigungsplatte 16 angeschraubt. Zwischen den Winkelstücken 17 befindet sich das Profil der Seitenwandsäule 13. Es handelt sich dabei um ein Hohlkammerprofil rechteckigen Querschnittes, an dessen Stirnseiten je eine C-förmige Anformung angebracht ist. Diese C-förmige Anformung bildet eine hinterschnittene Nut, wobei z.B. Klemmplättchen in diese hinterschnittene Nut eingeführt werden können. Mittels einer oder mehrerer Schraubverbindungen und Klemmplättchen können die Winkelstücke 17 und das Profil der Seitenwandsäule 13 trennfest miteinander verbunden werden. Es ist selbstverständlich auch möglich, andere Befestigungsmittel, wie Nieten, Bolzen und dergleichen oder Schweiss- oder Klebverbindungen oder Kombinationen solcher Verbindungen vorzusehen. Der Vorteil einer Schraubverbindung ist die leichte Lösbarkeit und somit der leichte Austausch von defekten Teilen etc.

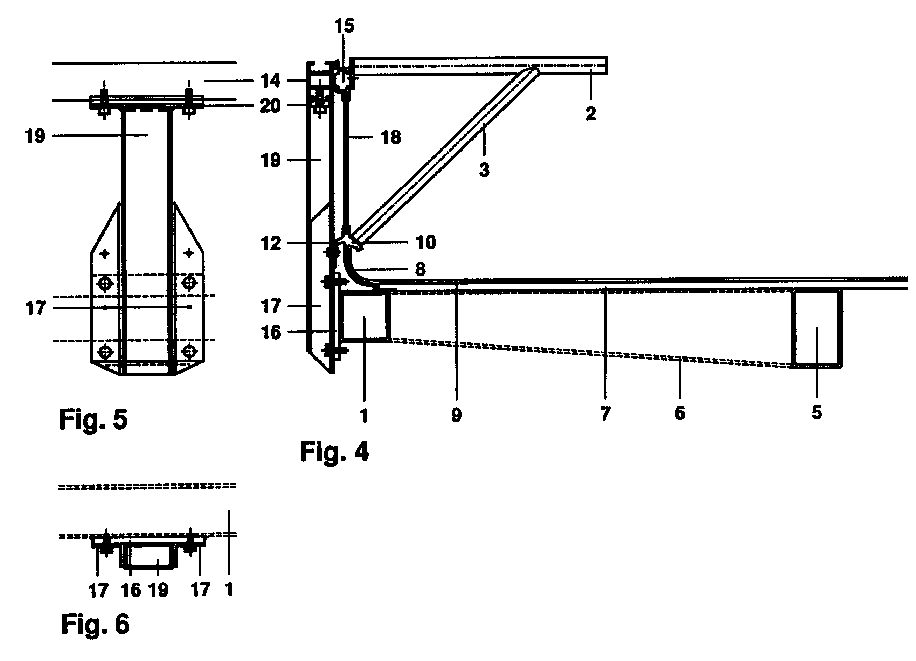

Die Figur 4 zeigt den Querschnitt durch einen Teil einer Gerippestruktur unter Verwendung von Konsolen im Bereich einer Konsole. Es ist wieder das torsionssteife Element 1 erkennbar, das sich über wenigstens eine Quertraverse und insbesondere eine Reihe von Traversen 6 (Leiterrahmen) am Fahrgestelllängsträger 5 abstützt. Die Elemente 1, 6 und 5 sind starr miteinander verbunden. Ein begehbarer Boden 7 ist über die Fahrgestellkonstruktion gelegt und der Boden 7 ist durch einen Bodenbelag 9 abgedeckt. Ein Bodengurt 8, wie vorbeschrieben, ist über dem torsionssteifen Element 1 angeordnet. Am torsionssteifen Element 1 sind über weitere Befestigungsplatten wenigstens eine, insbesondere aber mehrere Konsolen 19 festgelegt. Die Konsolen 19 können über die Länge des Wagenkastens regelmässig oder unregelmässig verteilt sein und können allein oder in Abwechslung mit Seitenwandsäulen angebracht werden. Die Auswahl, ob eine Konsole oder eine Seitenwandsäule verwendet werden soll, richtet sich nach der Gestaltung der Gerippestruktur, beispielsweise bezüglich Fenster und Türen und nach der geforderten Steifigkeit der Gerippestruktur. Die Konsole 19 reicht nur bis in eine Teilhöhe der Gerippestruktur. Beispielsweise kann der Abstand zwischen Bodenbelag 9 und Sitzschiene 15, 200 bis 400 mm und insbesondere 280 bis 320 mm betragen. Entsprechend ergibt sich eine Länge einer Konsole 19. Die Konsole 19 enthält die Winkelprofile 17, die mit der Befestigungsplatte 16 trennfest verbunden sind. An ihrem oberen Ende weist die Konsole 19 eine Befestigungsvorrichtung 20 auf. Im vorliegenden Falle ist die Befestigungsvorrichtung 20 ein Flachblech, das zwei längsliegende wulstförmige Erhebungen aufweist, welche der Nut am Längsgurt 14 angepasst sind. Durch den Formschluss der wulstförmigen Erhebung an der Befestigungsvorrichtung 20 und der Nut am Längsgurt 14 sowie einer Befestigung mittels Schrauben und Klemmplatten kann der Längsgurt 14 und die Konsole 19 trennfest und im wesentlichen verwindungsfrei oder verwindungsarm festgelegt werden. Wie vorbeschrieben kann die Sitzschiene 15 am Längsgurt 14 festgelegt werden. Der Längsgurt 14 erstreckt sich jeweils zwischen zwei Seitenwandsäulen und ist an den Seitenwandsäulen seinerseits beispielsweise mit Eckverbindungsstücken, wie in der CH-Patentschrift 627 982 beschrieben, verbunden. Der Querträger 2 und die Schrägverbindung 3 sind in der Sitzschiene 15, resp. der Schrägverbindungsaufnahme 10, festgelegt.

Figur 5 zeigt eine Seitenansicht einer Konsole. Die Konsole 19 weist an ihrem oberen Ende eine Befestigungsvorrichtung 20, beispielsweise in Form eines angeschweissten, angeklebten, angenieteten oder angeschraubten Flachbleches auf. Das Flachblech kann in Kastenaufbaulängsrichtung wulstförmige Erhebungen aufweisen, welche in die Nut eines Längsgurtes 14 greifen, und mit Schrauben und Klemmplatten kann eine trennfeste Verbindung hergestellt werden. An ihrem unteren Ende weist die Konsole an beiden Stirnseiten Winkelprofile 17 auf. Die Winkelprofile sind ihrerseits mit der Befestigungsplatte 16 verschraubt. Auch eine Verklebung, Vernietung oder andere Befestigungsmittel können vorgesehen werden.

Figur 6 zeigt eine Draufsicht auf eine Konsole, wobei das torsionssteife Element 1 und die Befestigungsplatte 16 trennfest miteinander verbunden sind und an die Befestigungsplatte 16 über die Winkelprofile 17 die Konsole 19 daran festgelegt ist. Beispielhaft sind hier Schraubverbindungen eingezeichnet. Die Konsole 19 ist in Figuren 4, 5 und 6 beispielhaft als Hohlprofil mit daran angebrachter Befestigungsvorrichtung 20 und Winkelprofilen 17 dargestellt. Die Konsole 19 kann jedoch auch entsprechend, z.B. als einstückiges Teil., als Guss- oder Schmiedeteil vorliegen.

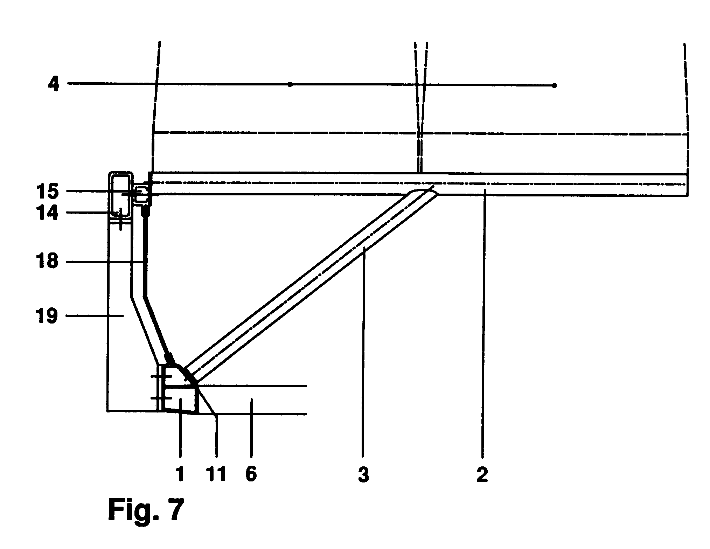

Die Figur 7 zeigt den Querschnitt durch einen Teil einer Gerippestruktur. Ein torsionssteifes Element 1 ist über die Traversen 6 am Fahrgestell-Längsträger 5 (nicht eingezeichnet) abgestützt oder das torsionssteife Element 1 ist an einer Bodenplatte 6 festgelegt, resp. ist das Randprofil einer Bodenplatte 6. Das torsionssteife Element 1 stellt im wesentlichen ein Zweikammerhohlprofil dar mit einer unteren rechteckigen und einer oberen trapezförmigen Kammer. Abkragend von der oberen trapezförmigen Kammer ist im torsionssteifen Element 1 eine z.B. U- oder V-förmige Anformung angebracht, welche eine Verkleidung 18, die sich über den ganze Länge der Gerippestruktur hinziehen kann, aufnimmt. An der schrägstehenden Seitenwand der trapezförmigen oberen Kammer stützt sich über die Fussplatte 11 die Schrägverbindung 3 ab. Die trapezförmige obere Kammer stellt somit die Schrägverbindungsaufnahme dar. Die Schrägverbindung 3 ist an ihrem oberen Ende trennfest mit dem Querträger 2 verbunden. Am Querträger 2 sind die Sitzgestelle 4 befestigt. An ihrem wandseitigen Ende ist der Querträger 2 über einen Flansch an der Sitzschiene 15 befestigt. Der Flansch kann beispielsweise mit Schrauben und Klemmplättchen, welche in einer hinterschnittenen Nut in der Sitzschiene geführt werden, festgelegt werden. Die Sitzschiene 15 ist am Längsgurt 14 befestigt. Der Längsgurt 14 ist an Konsole 19, beispielsweise durch Schrauben, Kleben, Nieten oder Kombinationen von solchen Befestigungsmitteln trennfest verbunden. Die beispielhaft dargestellte Konsole 19 weist einen seitlichen Versatz zum torsionssteifen Element 1 auf. Es können auch Seitenwandsäulen 13 mit seitlichem Versatz (nicht gezeigt) oder Seitenwandsäulen 13, die an einer Konsole 19 mit seitlichem Versatz festgelegt werden, angewendet werden. Gemäss der Anordnung in Figur 7 können die Kräfte, welche auf das torsionssteife Element 1 einwirken, dadurch vermindert werden, dass das torsionssteife Element 1 gegenüber der Gerippestrukturaussenseite durch die Ausgestaltung der Konsole 19 mit Versatz nach innen angeordnet ist. Dadurch werden die auf die Gerippestruktur einwirkenden Kräfte vermindert.

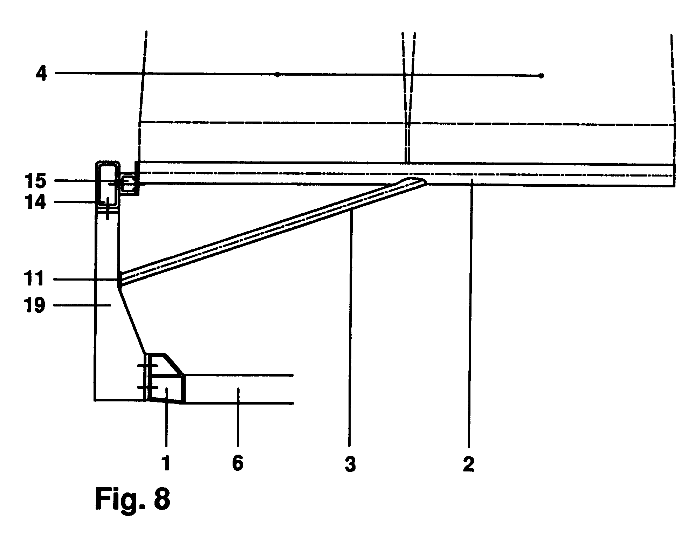

Figur 8 zeigt ein weiteres Beispiel einer Sitzbefestigung mit dem torsionssteifen Element 1 einem Querträger 2 und einer Schrägverbindung 3, die ihrerseits mittels Flansch und Schraubverbindung an der Sitzschiene 15 festgelegt ist. Die Sitzschiene ist am Längsgurt 14 angebracht. Der Längsgurt 14 wiederum ist mit der Konsole 19 verbunden und Konsole 19 ist am torsionssteifen Element 1 festgelegt. Das torsionssteife Element 1 stützt sich über die Traverse 6 oder Bodenplatte 6 ab. Die Schrägverbindung ist an ihrem wandseitigen Ende direkt an der Konsole 19 festgelegt, wobei das Festlegen durch Kleben oder Schweissen der Fussplatte 11 an die Konsole 19 erfolgen kann oder die Fussplatte 11 kann wenigstens einen Bolzen oder eine Nase aufweisen, welcher in eine Ausnehmung der Konsole 19 greift.

## Patentansprüche

1. Sitzbefestigung an den vertikalen Seiten einer Gerippestruktur, wobei die Gerippestruktur eine Sitzschiene (15), eine Schrägverbindungsaufnahme (10), Seitenwandsäulen (13) und/oder Konsolen als vertikale Elemente und einen Boden (7) enthält und wobei die Sitzbefestigung einen waagrechten oberen Querträger (2) und eine nach unten führende Schrägverbindung (3) enthält und wobei der Querträger (2) an vertikalen Elementen festgelegt ist und die Schrägverbindung an vertikalen Elementen oder im Eckbereich zwischen vertikalen Elementen und Boden (7) festgelegt ist, sich die Schrägverbindung (3) an ihrem unteren Ende über eine Schrägverbindungsaufnahme (10) abstützt, die ein torsionssteifes Element (1) enthält oder mit einem torsionssteifen Element (1) starr verbunden ist, das torsionssteife Element (1) sich über wenigstens die Länge einer Sitzanordnung innerhalb der Gerippestruktur erstreckt,
dadurch gekennzeichnet, dass
das torsionssteife Element (1) ein Hohlkammerprofil oder ein Randprofil einer Bodenplatte ist und die Schrägverbindungsaufnahme (10) oberhalb des Hohlkammerprofiles oder des Randprofiles mit diesem starr verbunden ist.

2. Sitzbefestigung nach Anspruch 1, dadurch gekennzeichnet, dass die Schrägverbindungsaufnahme (10) Teil der Seitenwandsäule (13) oder Konsole ist und die Seitenwandsäule (13) oder Konsole mit dem torsionssteifen Element (1) starr verbunden ist.

3. Sitzbefestigung nach Anspruch 1, dadurch gekennzeichnet, dass die Schrägverbindungsaufnahme (10) einen Bodengurt darstellt, der am torsionssteifen Element (1) starr festgelegt ist und der Bodengurt sich über die ganze Länge oder Teile der Länge des torsionssteifen Elementes (1) erstreckt.

4. Sitzbefestigung nach Anspruch 1, dadurch gekennzeichnet, dass der obere Querträger (2) an einer Sitzschiene (15) festgelegt ist und die Sitzschiene (15) ein Profil darstellt, das sich über die ganze Länge oder Teile der Länge der Gerippestruktur erstreckt.

5. Sitzbefestigung nach Anspruch 1, dadurch gekennzeichnet, dass die Sitzschiene (15) an einem Längsgurt und/oder an Konsolen und/oder Seitenwandsäulen (13) festgelegt ist.

6. Sitzbefestigung nach Anspruch 1, dadurch gekennzeichnet, dass die Konsolen und die Seitenwandsäulen (13) am torsionssteifen Element (1) festgelegt sind.

7. Sitzbefestigung nach Anspruch 1, dadurch gekennzeichnet, dass das torsionssteife Element (1) am Boden (7) abstützt und der Boden (7) ein Leiterrahmen oder eine Verbundplatte ist.

8. Verwendung der Sitzbefestigung gemäss Anspruch 1 in Gerippestrukturen.

9. Verwendung der Sitzbefestigung gemäss Anspruch 1 in Gerippestrukturen für Landfahrzeuge, Wasserfahrzeuge, Eisenbahnwagen, Reisebussen, Omnibussen oder Seilbahnen.

10. Verwendung der Sitzbefestigung gemäss Anspruch 1 in Gerippestrukturen für Reisebusse und Omnibusse in Niederflurbauweisen.

## Claims

1. Seat attachment on the vertical sides of a framework, in which the framework comprises a seat rail (15), a diagonal brace receiver (10), side wall columns (13) and/or brackets as vertical elements and a base (7) and in which the seat attachment comprises a horizontal top cross beam (2) and a downwardly directed diagonal brace (3) and in which the cross beam (2) is secured to vertical elements and the diagonal brace is secured to vertical elements or in the corner region between vertical elements and the base (7), the diagonal brace (3) is supported at its bottom end via a diagonal brace receiver (10) comprising a torsion-resistant element (1) or rigidly connected to a torsion-resistant element (1), and the torsion-resistant element (1) extends over at least the length of one seat arrangement within the framework, characterised in that the torsion-resistant element (1) is a window section or an edge section of a base plate and the diagonal brace receiver (10) is rigidly connected to the window section or the edge section above the latter.

2. Seat attachment according to claim 1, characterised in that the diagonal brace receiver (10) is part of the side wall column (13) or bracket and the side wall column (13) or bracket is rigidly connected to the torsion-resistant element (1).

3. Seat attachment according to claim 1, characterised in that the diagonal brace receiver (10) is a bottom boom which is rigidly secured to the torsion-resistant element (1) and the bottom boom extends over the entire length or parts of the length of the torsion-resistant element (1).

4. Seat attachment according to claim 1, characterised in that the top cross beam (2) is secured to a seat rail (15) and the seat rail (15) is a section which extends over the entire length or parts of the length of the framework.

5. Seat attachment according to claim 1, characterised in that the seat rail (15) is secured to a longitudinal boom and/or to brackets and/or to side wall columns (13).

6. Seat attachment according to claim 1, characterised in that the brackets and the side wall columns (13) are secured to the torsion-resistant element (1).

7. Seat attachment according to claim 1, characterised in that the torsion-resistant element (1) is supported on the base (7) and the base (7) is a ladder frame or a composite panel.

8. Use of the seat attachment according to claim 1 in frameworks.

9. Use of the seat attachment according to claim 1 in frameworks for land vehicles, watercraft, railway carriages, coaches, buses or cable cars.

10. Use of the seat attachment according to claim 1 in frameworks for low-floor coaches and buses.

## Revendications

1. Fixation de siège sur les côtés verticaux d'une structure d'ossature, la structure d'ossature contenant un rail de siège (15), un élément de réception pour un raccordement oblique (10), des colonnes de panneau latéral (13) et/ou des consoles en tant qu'éléments verticaux et un fond (7), et la fixation de siège contenant une poutre transversale supérieure horizontale (2) et un raccordement oblique (3) allant vers le bas, et la poutre transversale (2) étant fixée sur des éléments verticaux, et le raccordement oblique étant fixé sur des éléments verticaux ou dans la région de coin entre les éléments verticaux et le fond (7), le raccordement oblique (3) prenant appui sur son extrémité inférieure par l'intermédiaire d'un élément de réception pour le raccordement oblique (10) qui comprend un élément (1) rigide à la torsion ou qui est relié de manière inflexible à un élément rigide à la torsion, l'élément (1) rigide à la torsion s'étendant sur au moins la longueur d'un agencement de siège situé à l'intérieur de la structure d'ossature, caractérisée en ce que l'élément (1) rigide à la torsion est un profilé à chambre creuse ou un profilé de bord d'une plaque de fond et en ce que l'élément de réception pour le raccordement oblique (10) est relié de manière inflexible au profilé à chambre creuse ou au profilé de bord, au-dessus de celui-ci.

2. Fixation de siège selon la revendication 1, caractérisée en ce que l'élément de réception pour le raccordement oblique (10) fait partie de la colonne de panneau latéral (13) ou de console et en ce que la colonne de panneau latéral (13) ou la console est reliée de manière inflexible à l'élément (1) rigide à la torsion.

3. Fixation de siège selon la revendication 1, caractérisée en ce que l'élément de réception pour le raccordement oblique (10) constitue un élément formant ceinture de sol qui est fixé de manière inflexible sur l'élément (1) rigide à la torsion, et en ce que l'élément formant ceinture de sol s'étend sur toute la longueur ou sur des parties de la longueur de l'élément (1) rigide à la torsion.

4. Fixation de siège selon la revendication 1, caractérisée en ce que la poutre transversale supérieure (2) est fixée sur un rail de siège (15) et en ce que le rail de siège (15) constitue un profilé qui s'étend sur toute la longueur ou sur des parties de la longueur de la structure d'ossature.

5. Fixation de siège selon la revendication 1, caractérisée en ce que le rail de siège (15) est fixé sur une bande longitudinale et/ou sur des consoles et/ou sur des colonnes de panneau latéral (13).

6. Fixation de siège selon la revendication 1, caractérisée en ce que les consoles et les colonnes de panneau latéral (13) sont fixées sur l'élément (1) rigide à la torsion.

7. Fixation de siège selon la revendication 1, caractérisée en ce que l'élément (1) rigide à la torsion prend appui sur le fond (7) et en ce que le fond (7) est un cadre à échelons ou une plaque composite.

8. Application de la fixation de siège selon la revendication 1 dans des structures d'ossature.

9. Application de la fixation de siège selon la revendication 1 dans des structures d'ossature pour des véhicules terrestres, des bateaux, des wagons de chemin de fer, des autocars, des autobus ou des téléphériques.

10. Application de la fixation de siège selon la revendication 1 dans des structures d'ossature pour des autocars et des omnibus à construction surbaissée.
